# EUROPEAN PATENT SPECIFICATION

(11) **EP 2 378 719 B1**
(45) Date of publication and mention of the grant of the patent: **08.06.2016**
(21) Application number: 09832864.4
(22) Date of filing: 31.08.2009
(51) Int. Cl.: H04L 12/701, H04L 12/707, H04L 12/703, H04L 12/723

(54) **METHOD FOR IMPLEMENTING FAST REROUTE**
VERFAHREN ZUR IMPLEMENTIERUNG EINER SCHNELLUMLEITUNG
PROCÉDÉ DE MISE EN OEUVRE DE REROUTAGE RAPIDE

(30) Priority: 16.12.2008 CN 200810241251
(43) Date of publication of application: 19.10.2011
(73) Proprietor: ZTE Corporation, Shenzhen, Guangdong 518057 (CN)
(72) Inventor: LIN, Ning, Guangdong 518057 (CN); QIAN, Xiaohong, Guangdong 518057 (CN)
(74) Representative: Appleyard Lees IP LLP
(86) International application number: PCT/CN2009/073649
(87) International publication number: WO 2010/069182

(56) References cited:
- WO-A2-2005/039085
- WO-A2-2008/016558
- CN-A- 101 137 974
- CN-A- 101 237 409
- CN-A- 101 299 722
- CN-A- 101 442 494

## Description

### Technical Field

The present invention relates to a method for implementing Fast Reroute (FRR) in the driver layer. Related technology is known from WO 2005/039085 A2.

### Background of the Related Art

Fast Reroute (FRR) is to transfer the signaling and data to another pre-established path to ensure that the service will not be interrupted when a Label Switched Path (LSP) fails and cannot transmit the signaling and data properly. So FRR can be taken as a protection measure.

There are two different types of protection schemes in FRR:
1. Path protection, also called end-to-end protection, in which an extra LSP parallel to the existing LSP is established and only used when the existing LSP is invalid.
2. Partial protection, also called local protection, in which the backup LSP is just used to protect part of the original LSP. Wherein, according to the different protected objects, the way which is used to protect the node of the LSP is called node protection while the way which is used to protect the link of the LSP is called link protection.

At present, the commonly used FRR switch requires fast switch in general, usually within 50ms. Normally, the FRR is processed by the network processor (NP) when the FRR is performed on the devices that contain a NP. But there are usually no corresponding FRR hardware table entries on the Application Specific Integrated Circuit (ASIC) chips, so the former way to implement the FRR function in driver layer is to delete the original old invalid route and further add a new route by the upper layer protocol software for transfer when performing switch. The disadvantage of this method is the switch time cannot fulfill the time requirement when FRR performs switch on the condition that there is a large amount of routes corresponding to an invalid LSP and consequently a large amount of times for asking the driver to delete the routes are required.

Until now the Chinese patent CN200710166107.3, CN200710175346.5 and CN200710105840 all provide methods for implementing FRR in the protocol layer, and a drawback of the methods is having the improvement of the switch speed in the chip layer unconsidered. As it is impossible to modify the chip function of the ASIC chips, it is necessary to use the existing table entity function of the chips, instead of encoding as performed on NP chips, to implement the FRR function. Besides that, most of the commercial available switch chips do not provide table entities special for FRR function; however they all provide table entity management function for equal-cost multi-path routing (ECMP).

### Content of the Invention

The technical problem to be solved is to provide a FRR method, which overcomes the problem that the switching time cannot meet the requirement as a result of the driver deleting the routes too many times during FRR switch.

The features of the method according to the present invention are defined in the independent claim 1. Further improvements and embodiments are provided in the dependent claims.

According to one aspect of this document, a fast reroute method is provided.

The FRR method comprises the following steps of: *a.* a system starting up an upper layer protocol software to manage and configure a FRR route; b. an upper layer protocol software sending down an IP address of a active next hop of a FRR group and allocating an index for the FRR group different from an index of equal-cost multi-path routing (ECMP) group; a driver writing the IP address of the active next hop of the FRR group into an ECMP table of a chip and creating a software table to store correspondence between the FRR group and the corresponding ECMP group on the chip; c. informing the driver of a prefix address of a subnet route and the index of the FRR group, and the driver finding the corresponding index of the ECMP group in the software table according to the index of the FRR group, and writing information of the subnet route and the index of the ECMP group into hardware; d. an upper layer protocol software informing the driver of the index of the FRR group and an IP address of a new standby next hop when the IP address of the active next hop of the FRR group fails; the driver looking up the software table for the corresponding index of the ECMP group according to the index of the FRR group, and updating the next hop of the ECMP group to the IP address of the new standby next hop to complete the FRR.

In the above step b, the driver writes the ECMP group into the chip by invoking a SDK function of the chip.

In the above step b, if the ECMP group of the chip supports writing one next hop, then one next hop is written, while if the ECMP group of the chip must supports two or more next hops, then two or more same next hops is written.

In the above step c, the next hop of the subnet route does not use an IP address, but is associated with the index of the FRR group.

In the above step d, the driver writes the IP address of the new active next hop of the FRR group into the ECMP table on the chip by invoking a SDK function on the chip.

In the above step d, after the address of the ECMP table is updated, the software table in the step b is also updated.

As it can be seen from the above technical solution, compared with the existing methods, the solution put forward can implement the fast operation method supporting FRR switch on the most ASIC chips supporting ECMP. Moreover, the switching speed will not be increased no matter how many subnet routes use the same FRR group, so as to improve the responding speed of the system designed with ASIC chips for the FRR switch and improve the system efficiency dramatically. Since the FRR speed is not affected by the subnet route number, it is more stable. Meanwhile, this solution makes ASIC chips also support FRR, so it is not necessary that NP chips have to be used for implementing this function. Additionally, the cost of the device developed using ASIC chips is much lower than that of the device developed using NP.

The other advantages and features of the present invention will be demonstrated in the following description, which becomes apparent partially in the description or are understood by applying the present invention. The purpose and other advantages of the present invention can be achieved or acquired from the written description, claims and structures of the accompanying drawings particularly pointed out.

### Brief Description of Drawings

The drawings are used to further illustrate the present invention. The drawings are provided as a part of the description and used to explain the present invention in conjunction with the embodiments of the present invention, but do not intend to limit the present invention. The drawings are as follows:
FIG. 1 is an illustration of the subnet routes establishing switch using the correspondence between the FRR group and the ECMP group in the method of the embodiment of present invention;
FIG. 2 is the overall processing flow chart in the method of the embodiment of present invention;
FIG. 3 is the processing flow chart of sending down the FRR group in the method of the embodiment of present invention;
FIG. 4 is the processing flow chart of sending down the subnet route protected by the FRR in the method of the embodiment of present invention;
FIG. 5 is the processing flow chart of sending down by the upper layer protocol software when FRR switches to a next hop in the method of the embodiment of present invention.

### Preferred Embodiments of the Present Invention

### Function overview

The present document provides a method for implementing the FRR function using the ECMP table supplied by the ASIC chip. In this application, the chip BCM56624 supplied by Broadcom Corporation is used as an example, but the technical solution is not limited to this chip. The fast switch function of FRR can be implemented in the driver layer using the ECMP table management interfaces as long as the ECMP table and the management interface related to the ECMP table are provided by the chip suppliers.

The basic idea of the solution is to write the FRR as an ECMP group into the ECMP table of the chip, and no matter how many subnet routes using the same FRR for switch, the only action required to take is to modify the content of the next hop of the ECMP group corresponding to the FRR for one time, i.e. switching the next hop of the EMCP group from the invalid next hop to a active next hop without deleting and adding the subnet route for several times as performed in the former method.

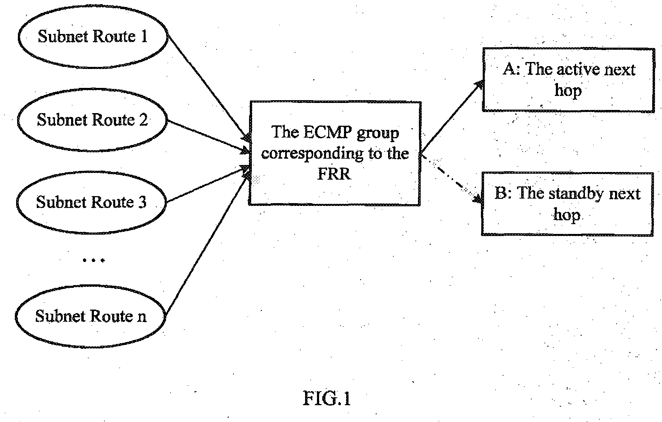

As shown in FIG. 1, though there are a plurality of subnet routes directing to the FRR group for switch, it does not need to process all of the subnet routes, but only need to switch the next hop of the ECMP group when switching if the ECMP group is used in implementation. For example, there are n subnet routes, and the next hop of these subnet routes are *A* and *B,* wherein *A* is the active next hop while *B* is the standby next hop. In this case, what is required to do is just to create one ECMP group, whose next hop is *A*, and once switch begins, just the next hop in this ECMP group is required to be switched into *B* to implement this FRR action, with deletion and addition of all the subnet routes are not required. As shown in FIG. 1, the FRR can be implemented only by switching the next hop indicated by solid line into the one indicated by dashed line.

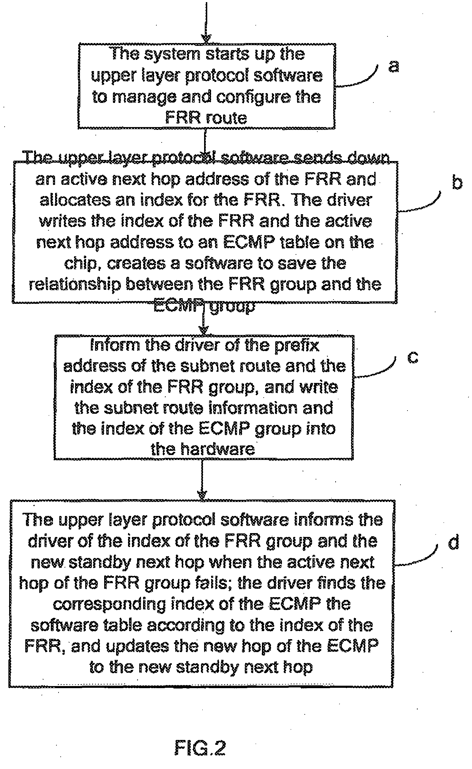

As shown in FIG. 2, the technical scheme comprises the following steps:
*a.* The system starts up the upper layer protocol software to manage and configure FRR route;
*b*. The upper layer protocol software sends down the IP address of a active next hop of FRR to the driver layer, the sending down by the protocol layer and processing by the driver are performed according to the following three steps of:
   *b*1. Allocating an index of the FRR group, this index being different from that of the ECMP group allocated by the upper layer protocol software;
   *b*2*.* Taking the IP address sent down as the active next hop of the index of the FRR group, and informing the driver of the index of the FRR group and the IP address of the active next hop;
   *b*3. The driver writing the index of the FRR group and the IP address of the active next hop into the ECMP table on the chip as the index of the ECMP group and the next hop IP address of the ECMP group respectively, and saving the index of the ECMP group which is written onto the chip. The writing operation onto the chip by the driver herein is in the same way with the operation of sending down the ECMP route by the operation upper layer protocol software, except that the group should be distinguished in the software table of the driver as whether it is sent down by the real ECMP group or by the active next hop of the FRR. Because the FRR shares the same next hop with the real ECMP during processing on the chip, the allocated index of the FRR group should be different from the index of the real ECMP group in the step b1.
*c*. Informing the driver of the prefix address of a subnet route and the index of the FRR group when the subnet route is required to backup of the link of the FRR group, and then the driver retrieving the correspondence between the index of the FRR group and the index of the ECMP group according to the index of the FRR group provided by the upper layer protocol software, and writing the subnet route information and the index of the ECMP group into the hardware, as a result, the subnet route is directed to the EMCP group of the hardware. With such operations, the next hops of the subnet routes needing protection of the FRR group being all directed to the practically effective next hop of the ECMP group;
*d*. After the step c, the routes directing to the FRR group being able to implement the FRR for protection. Then, if the active next hop of the FRR group fails and is required to switch into the standby next hop, the operation is as follows:
   *d*1*.* The upper software just needs to inform the driver of the index of the FRR group and the IP address of the new standby next hop, and does not need to inform the driver of all the subnet routes referring to the FRR;
   *d*2. The driver finds the index of the ECMP corresponding to the index of the FRR group in the software table, and updates the IP address of the new standby next hop to the next hop of the ECMP to finish the FRR switch.

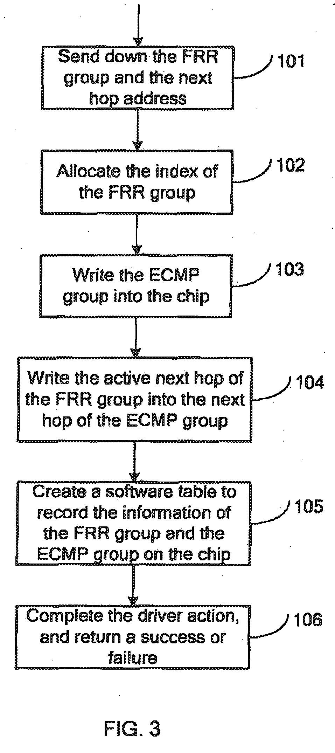

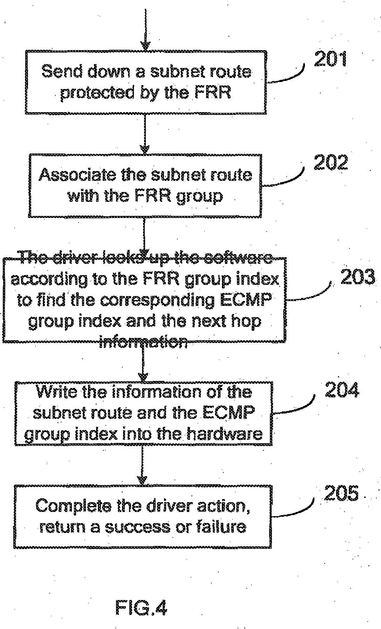

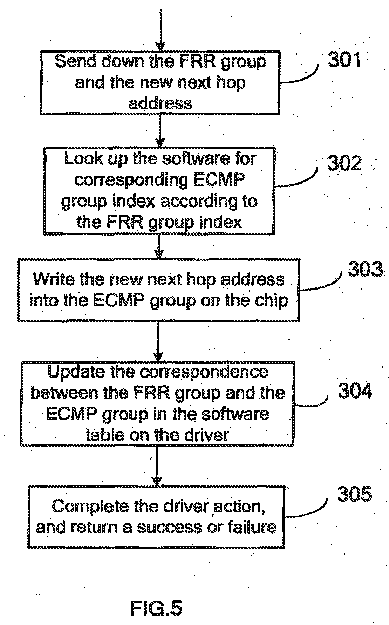

The step *a* and *b* are the operation of the upper layer protocol software writing the FRR group and the next hop to the driver, corresponding to FIG. 3; the step c is the operation of the upper layer protocol software writing in the subnet route requiring protection, corresponding to FIG. 4; the *step d* is the operation of the upper layer protocol software on the driver during the switch of the subnet route, corresponding to FIG. 5.

To make the technical scheme understood more clearly, herein an example is taken as follows: there is one subnet route 123.1.1.0, which has two next hops, the one being used is 123.1.1.1, and the other one being standby is 123.1.1.2.

The processing in step *a* and *b* is that the upper layer protocol software creates an FRR group A, in which the members 123.1.1.1, and then the upper layer writes the group A to the driver. The driver layer creates an ECMP group a correspondingly and writes 123.1.1.1 to the ECMP group a; The processing in step a is that the upper layer sends down the subnet route 123.1.1.0 and

The processing in step *c* is that the upper layer protocol software sends down the subnet route 123.1.1.0, and informs the driver that the next hop of the subnet route is the FRR group *A*. Thus, the driver finds the ECMP group *a* according to the FRR group *A,* and then writes the information "the subnet route 123.1.1.0 + ECMP group *a'* to the hardware. In this way, according to ECMP group *a,* the hardware can get that the next hop of 123.1.1.0 is the next hop 123.1.1.1 corresponding to the ECMP group a;

The processing in step *d* is that if 123.1.1.1 fails, and now it needs to reroute to 123.1.1.2. At this time, the upper layer protocol software sends down the switch information of the FRR group *A*, and informs the driver that the next hop of the FRR group *A* is not 123.1.1.1 anymore, and it has switched to the new 123.1.1.2. On receiving the information, the driver directly finds the ECMP group *a* according to the FRR group *A*, and modifies the next hop of the ECMP group *a* to be 123.1.1.2. By such modification, the subnet route 1231.1.0 directing to the ECMP group *a* just now has rerouted the next hop automatically.

The advantage of the method is that by informing the driver of the modification of the FRR group A directly, instead of sending down the detail information of each subnet routes, as can be seen from step *d* of the method, the next hops of all the subnet routes can be modified indirectly when there are plenty of routes besides 123.1.1.0 directing to the FRR group A.

The steps in FIG. 2 will be described specifically as follows, and FIG. 3, corresponding to the steps *a* and *b* in FIG. 2, illustrates the flow of FRR group sending down processing functions.

Step 101, sending down the FRR group and IP address of currently enabled next hop when the upper layer protocol software enables the FRR function;
Step 102, allocating an index for the FRR group, which is different from the index of a real ECMP group sending down by the upper layer protocol software, to avoid the case of the index of the FRR group occupying the index of the real ECMP group;
Step 103, the driver takes the index allocated for the FRR group as the index of the ECMP table on the chip to invoke the SDK function, and writes the ECMP group onto the chip;
Step 104, the driver allocates and creates an ECMP group according to the index of the FRR group, and writes the active next hop of the FRR group to the ECMP group; herein, the writing should be based on the different circumstance of each different chip. If the ECMP group of the chip supports writing in a next hop, then a next hop can be written in, and if two or more next hops should be supported, then two or more same next hops can be written.

Step 105, a software table is created in the driver to save the relationship between the FRR group and the corresponding ECMP group on the chip, so that, when a subnet route is added, the index of ECMP group that ought to correspond to the index of the FRR group associated with the subnet route in the hardware can be retrieved;
Step 106, if the hardware table on the chip is written successfully by the driver, a success is returned, while, if the driver fails to write the hardware table, then a failure is returned.

FIG. 4 corresponds to the step *c* in FIG. 2, and is the flow chart of sending down subnet routes protected by the FRR:
Step 201, when there is a subnet route to be protected by FRR, the upper layer protocol software is required to send down the subnet route to the driver;
Step 202, the next hop of the subnet route does not use the IP address; instead, it is associated with the index of the FRR group protecting the subnet route;
Step 203, the driver looks up the software table established by the FRR group and ECMP group for the index of the ECMP group corresponding to the FRR group according to the index of FRR group sent down by the upper layer protocol software, and further gets the information of the next hop of the ECMP group;
Step 204, the index information of the ECMP table and the related information of the subnet route are written into the subnet table of the hardware on the chip; the next hop of the subnet route in the hardware directs to the found ECMP group. In this way, the subnet route for protection of FRR is related to the index of the ECMP group written into the hardware as a replacement of the FRR group.

The prefix of the subnet route is the content of the subnet route table to be written into the hardware, for example, 123.0.0.0 is the prefix of a subnet route. The subnet route table refers to the subnet route table in the hardware. When the subnet route is written, if the subnet route is of FRR type, it is necessary to find a corresponding index of the ECMP table and write it into the hardware as the next hop of the subnet route. Thus by knowing the next hop corresponding to the subnet route is an ECMP group, the hardware will find the ECMP group in the ECMP table. In addition, the ECMP group records one or more next hops, which is the real next hop of the subnet route.

Step 205, if the driver writes the hardware table on the chip successfully, a success is returned, or else, a failure is returned.

FIG. 5, corresponding to the step d in FIG. 2, is the flow chart of sending down by the upper layer protocol software when FRR switches a next hop.

Step 301, the upper layer protocol software sends down a FRR group and address of the new next hop when the FRR is performed; where this next hop is a standby next hop for the FRR group switching, and it is active at this time since the former next hop has been invalid.

Step 302, find the ECMP group in the software table to get the index of the ECMP group, and prepare to write the new next hop to be active to the hardware;
Step 303, update the content of the ECMP group on the chip; By invoking the SDK function on the chip, write IP address of the new active next hop into the ECMP group to take the place of the former invalid one to complete the action of switching the next hop in the hardware. The former next hop will not work.

Step 304, update the relationship table of the FRR group and the ECMP group in the software table, write the new next hop into the next hop of the ECMP group and delete the former next hop to synchronize the software table and the hardware table on the chip;
Step 305, if the hardware table on the chip is written successfully by the driver, a success is returned, or else, a failure is returned.

The above description is just preferred embodiments of the present invention, and does not intend to limit the present invention. For those having ordinary skills in the art, the present

### Industrial Applicability

Compared with the existing methods, the solution put forward by the present invention can implement the fast operation method supporting FRR switch on the most ASIC chips supporting ECMP. Moreover, the switching speed will not be increased no matter how many subnet routes use the same FRR group, so as to improve the responding speed of the system designed with ASIC chips for the FRR switch and improve the system efficiency dramatically. Since the FRR speed is not affected by the subnet route number, it is more stable. Meanwhile, this solution makes ASIC chips also support FRR, so it is not necessary that NP chips have to be used for implementing this function. Additionally, the cost of the device developed using ASIC chips is much lower than that of the device developed using NP.

## Claims

1. A method for implementing fast reroute 1, FRR, **characterized by** comprising the following steps of:
*a.* a system starting up an upper layer protocol software to manage and configure a FRR route;
*b*. the upper layer protocol software sending down an IP address of an active next hop of a FRR group and allocating an index to the FRR group different from an index of an equal-cost multi-path routing, ECMP, group; a driver writing the IP address of the active next hop of the FRR group into an ECMP table of an ASIC chip and creating a software table to store correspondence between the FRR group and the corresponding ECMP group on the chip;
*c*. the upper layer protocol software informing the driver of a prefix address of a subnet route and the index of the FRR group, and the driver finding the corresponding index of the ECMP group in the software table according to the index of the FRR group, and writing information of the subnet route and the index of the ECMP group into hardware;
*d.* the upper layer protocol software informing the driver of the index of the FRR group and an IP address of a new standby next hop when the IP address of the active next hop of the FRR group fails; the driver looking up the software table for the corresponding index of the ECMP group according to the index of the FRR group, and updating the next hop of the ECMP group to the IP address of the new standby next hop to complete the FRR.

2. The method as claimed in claim 1, wherein in the step *b*, the driver writes the ECMP group into the chip by invoking a software development kit, SDK, function of the chip (103).

3. The method as claimed in claim 1, wherein in the step *b*, if the ECMP group of the chip supports writing one next hop, then one next hop is written, while if the ECMP group of the chip must supports two or more next hops, then two or more same next hops is written (104).

4. The method as claimed in claim 1, wherein in the step *c*, the next hop of the subnet route does not use an IP address, but is associated with the index of the FRR group (202).

5. The method as claimed in claim 1, wherein in the step *d*, the driver writes the IP address of a new active next hop of the FRR group into the ECMP table on the chip by invoking a software development kit SDK function on the chip (303).

6. The method as claimed in claim 1, wherein in the step *d*, after the address of the ECMP table is updated, the software table in the step *b* is also updated (304).

## Patentansprüche

1. Verfahren zum Implementieren eines schnellen Umroutens FRR, das die folgenden Schritte umfasst:
*a*. ein System fährt eine Protokollsoftware oberer Schicht herauf, um eine FRR-Route zu verwalten und zu konfigurieren;
*b.* die Protokollsoftware oberer Schicht sendet eine IP-Adresse eines aktiven nächsten Sprungs einer FRR-Gruppe herunter und vergibt einen Index an die FRR-Gruppe, der von einem Index einer Gleichkosten-Mehrwegeroutungs- bzw. ECMP-Gruppe verschieden ist; ein Treiber schreibt die IP-Adresse des nächsten aktiven Sprungs der FRR-Gruppe in eine ECMP-Tabelle eines Chips und erzeugt eine Softwaretabelle zum Speichern von Korrespondenz zwischen der FRR-Gruppe und der entsprechenden ECMP-Gruppe auf dem Chip;
*c*. die Protokollsoftware oberer Schicht informiert den Treiber über eine Präfixadresse einer Subnetzroute und den Index der FRR-Gruppe und der Treiber findet den entsprechenden Index der ECMP-Gruppe in der Softwaretabelle gemäß dem Index der FRR-Gruppe und schreibt Informationen der Subnetzroute und den Index der ECMP-Gruppe in Hardware;
*d*. die Protokollsoftware oberer Schicht informiert den Treiber über den Index der FRR-Gruppe und eine IP-Adresse eines neuen Standby-nächsten-Sprungs, wenn die IP-Adresse des aktiven nächsten Sprungs der FRR-Gruppe fehlschlägt; der Treiber schlägt die Softwaretabelle nach dem entsprechenden Index der ECMP-Gruppe gemäß dem Index der FRR-Gruppe nach und aktualisiert den nächsten Sprung der ECMP-Gruppe auf die IP-Adresse des neuen Standby-nächsten-Sprungs zur Vervollständigung der FRR.

2. Verfahren nach Anspruch 1, wobei in Schritt *b* der Treiber die ECMP-Gruppe durch Aufrufen einer Funktion des Softwaredevelopmentkit SDK des Chips in den Chip schreibt (103).

3. Verfahren nach Anspruch 1, wobei in Schritt *b*, wenn die ECMP-Gruppe des Chips Schreiben eines nächsten Sprungs unterstützt, dann ein nächster Sprung geschrieben wird, während, wenn die ECMP-Gruppe des Chips zwei oder mehr nächste Sprünge unterstützen muss, dann zwei oder mehr selbe nächste Sprünge geschrieben werden (104).

4. Verfahren nach Anspruch 1, wobei in Schritt c der nächste Sprung der Subnetzroute keine IP-Adresse benutzt, sondern mit dem Index der FRR-Gruppe assoziiert wird (202).

5. Verfahren nach Anspruch 1, wobei in Schritt d der Treiber die IP-Adresse eines neuen aktiven nächsten Sprungs der FRR-Gruppe durch Aufrufen einer Funktion des Softwaredevelopmentkit SDK auf dem Chip in die ECMP-Tabelle auf dem Chip schreibt (303).

6. Verfahren nach Anspruch 1, wobei in Schritt *d*, nachdem die Adresse der ECMP-Tabelle aktualisiert ist, die Softwaretabelle in Schritt *b* auch aktualisiert wird (304).

## Revendications

1. Procédé de mise en oeuvre d'un reroutage rapide, FRR, **caractérisé en ce qu'**il comprend les étapes suivantes selon lesquelles :
a. un système démarre un logiciel de protocole de couche supérieure pour gérer et configurer une route de FRR ;
b. le logiciel de protocole de couche supérieure envoie vers les couches inférieures une adresse IP d'un saut suivant actif d'un groupe de FRR et alloue au groupe de FRR un indice différent d'un indice d'un groupe de routage par trajets multiples de même coût, ECMP ; un pilote écrit l'adresse IP du saut suivant actif du groupe de FRR dans une table d'ECMP d'une puce ASIC et crée une table logicielle pour stocker une correspondance entre le groupe de FRR et le groupe d'ECMP correspondant sur la puce ;
c. le logiciel de protocole de couche supérieure informe le pilote d'une adresse de préfixe d'une route de sous-réseau et de l'indice du groupe de FRR, et le pilote trouve l'indice correspondant du groupe d'ECMP dans la table logicielle en fonction de l'indice du groupe de FRR, et écrit des informations concernant la route de sous-réseau et l'indice du groupe d'ECMP dans un matériel ;
d. le logiciel de protocole de couche supérieure informe le pilote de l'indice du groupe de FRR et d'une adresse IP d'un nouveau saut suivant en attente lorsque l'adresse IP du saut suivant actif du groupe de FRR ne fonctionne pas ; le pilote recherche dans la table logicielle l'indice correspondant du groupe d'ECMP en fonction de l'indice du groupe de FRR, et met à jour le saut suivant du groupe d'ECMP à l'adresse IP du nouveau saut suivant en attente pour terminer le FRR.

2. Procédé selon la revendication 1, dans lequel, à l'étape b, le pilote écrit le groupe d'ECMP sur la puce en invoquant une fonction Ensemble de développement logiciel, SDK, de la puce (103).

3. Procédé selon la revendication 1, dans lequel, à l'étape b, si le groupe d'ECMP de la puce prend en charge l'écriture d'un saut suivant, alors un saut suivant est écrit, tandis que si le groupe d'ECMP de la puce doit prendre en charge deux sauts suivants ou plus, alors deux sauts suivants identiques ou plus sont écrits (104).

4. Procédé selon la revendication 1, dans lequel, à l'étape c, le saut suivant de la route de sous-réseau n'utilise pas d'adresse IP, mais est associé à l'indice du groupe de FRR (202).

5. Procédé selon la revendication 1, dans lequel, à l'étape d, le pilote écrit l'adresse IP d'un nouveau saut suivant actif du groupe de FRR dans la table d'ECMP sur la puce en invoquant une fonction Ensemble de développement logiciel, SDK, de la puce (303).

6. Procédé selon la revendication 1, dans lequel, à l'étape d, après que l'adresse de la table d'ECMP a été mise à jour, la table logicielle est également mise à jour à l'étape b (304).
